(19) Europäisches Patentamt
European Patent Office
Office européen des brevets

(11) **EP 1 523 654 B1**

(12) **EUROPÄISCHE PATENTSCHRIFT**

(45) Veröffentlichungstag und Bekanntmachung des Hinweises auf die Patenterteilung:
**04.07.2007 Patentblatt 2007/27**

(51) Int Cl.:
***G01B 11/25*** (2006.01)          ***G06K 9/20*** (2006.01)

(21) Anmeldenummer: 03764905.0

(22) Anmeldetag: **17.07.2003**

(86) Internationale Anmeldenummer:
**PCT/DE2003/002410**

(87) Internationale Veröffentlichungsnummer:
**WO 2004/010076 (29.01.2004 Gazette 2004/05)**

(54) **VERFAHREN UND VORRICHTUNG ZUR DREIDIMENSIONALEN ERFASSUNG VON OBJEKTEN SOWIE VERWENDUNG DER VORRICHTUNG UND DES VERFAHRENS**

METHOD AND DEVICE FOR THREE-DIMENSIONALLY DETECTING OBJECTS AND THE USE OF THIS DEVICE AND METHOD

PROCEDE ET DISPOSITIF DE DETECTION TRIDIMENSIONNELLE D'OBJETS ET UTILISATION DUDIT DISPOSITIF ET DUDIT PROCEDE

(84) Benannte Vertragsstaaten:
**AT BE BG CH CY CZ DE DK EE ES FI FR GB GR HU IE IT LI LU MC NL PT RO SE SI SK TR**

(30) Priorität: **18.07.2002 DE 10232690**

(43) Veröffentlichungstag der Anmeldung:
**20.04.2005 Patentblatt 2005/16**

(73) Patentinhaber: **SIEMENS AKTIENGESELLSCHAFT**
**80333 München (DE)**

(72) Erfinder:
• **RUMMEL, Peter**
**83703 Gmund (DE)**
• **HOFFMANN, Christian**
**81545 München (DE)**
• **FORSTER, Frank**
**80377 München (DE)**

(56) Entgegenhaltungen:
**EP-A- 0 328 443          DE-A- 19 963 333**
**US-B1- 6 341 016**

• **GRIFFIN P M ET AL: "GENERATION OF UNIQUELY ENCODED LIGHT PATTERNS FOR RANGE DATA ACQUISITION" PATTERN RECOGNITION, PERGAMON PRESS INC. ELMSFORD, N.Y, US, Bd. 25, Nr. 6, 1. Juni 1992 (1992-06-01), Seiten 609-616, XP000290629 ISSN: 0031-3203**

**Beschreibung**

Die Erfindung betrifft ein Verfahren zur dreidimensionalen Erfassung von Objekten, bei dem

- auf das zu erfassende Objekt ein Farbmuster mit bekannten Projektionsdaten projiziert wird,
- das auf das zu erfassende Objekt projizierte Muster mit Hilfe einer Kamera erfasst wird und
- das von der Kamera erzeugte Abbild in einer Auswerteeinheit zu dreidimensionalen Objektkoordinaten verarbeitet wird.

Die Erfindung betrifft ferner eine Vorrichtung zur Ausführung des Verfahrens und eine Verwendung der Vorrichtung und des Verfahrens.

Verfahren zur dreidimensionalen Erfassung von Objekten werden für verschiedene Anwendungszwecke, unter anderem auch zur Identifizierung und Authentifizierung von Personen benötigt. So ist es beispielsweise aus der DE 199 63 333 A1 bekannt, ein zweidimensionales Farbmuster aus farbigen Musterelementen auf ein zu erfassendes Objekt zu projizieren und das auf den zu erfassenden Gegenstand projizierte Farbmuster mit Hilfe einer Kamera zu erfassen. Aufgrund der räumlichen Beschaffenheit der Oberfläche des zu erfassenden Objekts sind die Farbmuster in dem von der Kamera erfassten Abbild gegenüber der ursprünglichen Anordnung verschoben, so dass bei bekannter Position des Projektors und der Kamera die dreidimensionalen Daten eines Objektpunktes auf der Oberfläche des zu erfassenden Objekts berechnet werden können.

Das bekannte Verfahren ist allerdings nicht für farbige Szenen geeignet. Bei dem bekannten Verfahren ist es vielmehr nötig, ein Referenzbild mit gleichmäßig weißer Objektbeleuchtung aufzunehmen. Dieses Referenzbild erlaubt die Bestimmung der projizierten Farben im Musterbild. Da bei dem bekannten Verfahren wenigstens zwei Aufnahmen erforderlich sind, eignet es sich nur eingeschränkt für sich bewegende oder verformende Objekte. Daher ist dieses bekannte Verfahren nur eingeschränkt für die Erkennung einer Hand oder eines Gesichts geeignet.

Aus der Veröffentlichung P. Vuylsteke und A. Oosterlinck, "Range Image Acquisition with a Single Binary-Encoded Light Pattern", IEEE Transactions on Pattern Analysis and Machine Intelligence, Band 12, Nr. 2, Februar 1990 ist bekannt, auf das zu erfassende Objekt ein schwarz-weißes, zweidimensionales Muster mit zusätzlicher Codierung zu projizieren. Dabei wird versucht, den Projektionswinkel für jeden Punkt des Kamerabilds aus der Bildumgebung des Punktes zu ermitteln. Insbesondere wird versucht, aus den Verzerrungen der projizierten Muster, die durch die räumliche Ausrichtung der Objektfläche aus der Sicht der Kamera entstehen, den Projektionswinkel des jeweiligen Punkts zu berechnen. Dies gelingt jedoch nur bei Objekten mit stetig verlaufender Oberfläche gut. Wenn jedoch am zu erfassenden Objekt Tiefensprünge vorhanden sind, werden die codierenden Musterelemente der Bildpunktumgebung gestört, was zu nicht bestimmbaren oder falschen Projektorwinkeln und im Ergebnis zu falschen dreidimensionalen Objektkoordinaten führt.

Ausgehend von diesem Stand der Technik liegt der Erfindung daher die Aufgabe zugrunde, ein Verfahren zur dreidimensionalen Erfassung von Objekten anzugeben, das weder durch die Färbung noch durch Tiefensprünge des zu erfassenden Objektes beeinträchtigt wird.

Der Erfindung liegt ferner die Aufgabe zugrunde, eine Vorrichtung zur Durchführung des Verfahrens anzugeben.

Diese Aufgaben werden durch ein Verfahren und eine Vorrichtung mit den Merkmalen der unabhängigen Ansprüche gelöst. In davon abhängigen Ansprüchen sind vorteilhafte Ausgestaltungen und Weiterbildungen der Erfindung angegeben.

Bei dem Verfahren gemäß der Erfindung werden die Projektionskoordinaten im Farbmuster mit Hilfe eines redundanten Codes codiert. Die Verwendung eines Farbmusters zur Codierung bietet den Vorteil, dass die Codierung derart kompakt ausgeführt werden kann, dass eine Beschädigung des Codes durch Tiefensprünge oder Verdeckungen insbesondere bei der Gesichtserkennung unwahrscheinlich ist. Darüber hinaus ist die Codierung robust gegen Fehler, da mit Hilfe der redundanten Codierung durch die Färbung des Objektes hervorgerufene Farbverfälschungen im Abbild detektiert und eliminiert werden können.

Eine zur Durchführung des Verfahrens eingerichtete Vorrichtung weist daher einen Projektor auf, der ein redundant codiertes Farbmuster auf das zu erfassende Objekt projiziert.

Bei einer bevorzugten Ausführungsform des Verfahrens sind die Farbwerte des Farbmusters in Codewörter unterteilt. Die Codewörter weisen dabei vorzugsweise eine nicht-triviale Hamming-Distanz auf. Unter einer nichttrivialen Hamming-Distanz soll dabei eine Hamming-Distanz größer 1 verstanden werden. Mit dieser Form der Codierung wurden gute Ergebnisse bei der Erkennung der codierten Projektionsdaten erzielt.

Die Robustheit der Codierung kann ferner dadurch erhöht werden, dass die Codewörter überlappen.

Weitere Maßnahmen betreffen die Farbänderungen in den einzelnen Kanälen. Die Erkennungsgenauigkeit kann beispielsweise dadurch gesteigert werden, dass die Farbwerte in jedem Farbkanal nur jeweils zwei vorherbestimmte Farbwerte annehmen können. Zweckmäßigerweise erfolgt die Farbänderung in jedem Farbkanal zwischen einem minimal möglichen Wert und einem weiteren maximal möglichen Wert.

Weiter kann gefordert werden, dass Färbänderungen in mindestens zwei Farbkanälen gleichzeitig erfolgen müssen.

Durch diese beiden Maßnahmen können Störungen eliminiert werden, die auf Änderungen der Färbung des zu erfassenden Objekts zurückgehen.

Eine weitere sinnvolle Forderung an das Farbmuster betrifft die Anzahl der Farbänderungen in jedem Codewort. Wenn in jedem Codewort in jedem der Farbkanäle wenigstens eine Farbänderung stattfindet, können sich Erkennungsfehler nicht über mehrere Codewörter hinaus fortpflanzen.

Weiter verbessern lässt sich die Erkennungsgenauigkeit ferner, indem auch die Farbänderungen zu Codewörtern eines redundant codierten Codes zusammengefasst werden. Durch diese Forderungen an die Codierung des Farbmusters lassen sich Fehler bei der Decodierung zuverlässig detektieren.

Die Decodierung erfolgt dabei, indem in der Auswerteeinheit die Wendepunkte des detektierten Messsignals durch eine Bestimmung der Maxima der ersten Ableitung detektiert werden. Die so detektierten Wendepunkte, die potentiellen Farbänderungen zugeordnet werden können, werden anschließend auf die Kriterien überprüft, die die Codierung des Farbcodes erfüllt. Unter anderem werden dabei die Größe der Farbänderung und die Korrelation der Farbänderungen zwischen den Kanälen überprüft. Ein weiteres Kriterium ist zum Beispiel, dass die Wendepunkte mit positiver und negativer Steigung jeweils paarweise auftreten müssen und dass die Farbänderungen den Codewörtern der Farbänderungen entsprechen müssen.

Schließlich werden die Farbänderungen auf die Übereinstimmung mit den codierten Codewörtern der Farbänderung geprüft und die einem Punkt des erfassten Abbilds zugeordneten Projektionsdaten bestimmt. Aus den Projektionsdaten und den Koordinaten des jeweiligen Punkts in dem von der Kamera erfassten Abbild können dann die dreidimensionalen Objektkoordinaten der Oberfläche des zu erfassenden Objekts berechnet werden.

Nachfolgend wird die Erfindung im Einzelnen anhand der beigefügten Zeichnung erläutert. Es zeigen:

Figur 1            eine Ansicht einer Vorrichtung für die dreidimensionale Erfassung von Objektdaten;

Figur 2a bis c     Diagramme, die die Datenreduktion veranschaulichen; und

Figur 3a und b    Darstellungen von rekonstruierten Profil-Linien eines erfassten Objekts.

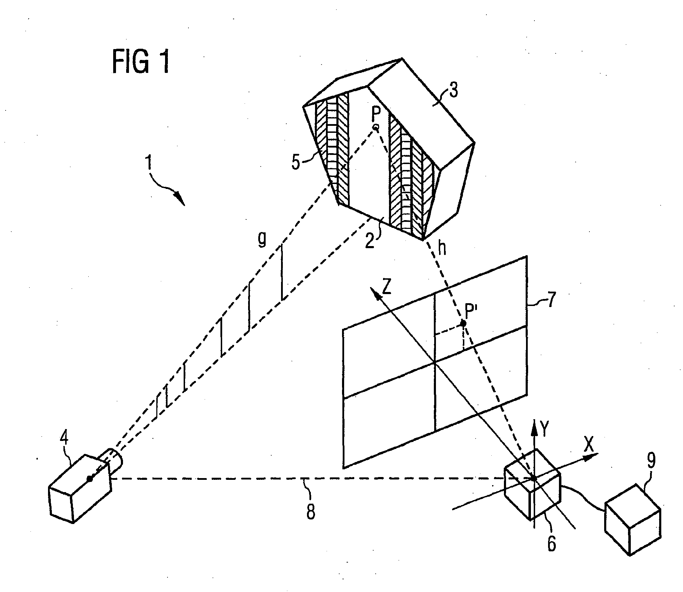

In Figur 1 ist eine Vorrichtung 1 dargestellt, die dazu dient, die dreidimensionalen Objektkoordinaten einer Oberfläche 2 eines zu erfassenden Objekts 3 zu bestimmen.

Die Vorrichtung 1 weist einen Projektor 4 auf, der ein Farbmuster 5 auf die Oberfläche 2 des zu erfassenden Objekts 3 projiziert. In dem in Figur 1 dargestellten Fall ist das Farbmuster 5 aus einer Reihe von nebeneinander liegenden Farbstreifen zusammengesetzt. Es ist jedoch auch denkbar, ein zweidimensionales Farbmuster anstelle des in Figur 1 dargestellten eindimensionalen Farbmusters 5 zu verwenden.

Bei dem in Figur 1 dargestellten Ausführungsbeispiel kann jedem Punkt P der Oberfläche 2 des Objekts 3 eine Projektionsebene g zugeordnet werden. Durch das Farbmuster 5 sind somit Projektionsdaten codiert. Das auf die Oberfläche 2 des Objekts 3 projizierte Farbmuster 5 wird durch eine Kamera 6 in ein Abbild 7 umgewandelt, in dem der Punkt P auf der Oberfläche 2 in den Punkt P' transformiert wird. Bei bekannter Anordnung des Projektors 4 und der Kamera 6, insbesondere bei bekannter Länge einer Basisstrecke 8 können durch Triangulation die dreidimensionalen Raumkoordinaten des Punktes P auf der Oberfläche 2 berechnet werden. Die dazu erforderliche Datenreduktion und Auswertung wird von einer Auswerteeinheit 9 vorgenommen.

Um die Bestimmung der dreidimensionalen Raumkoordinaten des Punktes P auf der Oberfläche 2 aus einem einzelnen Abbild 7 auch dann zu ermöglichen, wenn die Oberfläche 2 des Objekts 3 Tiefensprünge und Verdeckungen aufweist, ist das Farbmuster 5 so konstruiert, dass die Codierung der Projektionsebenen g möglichst robust gegen Fehler ist. Ferner können durch die Codierung Fehler, die auf der Färbung des Objektes beruhen, eliminiert werden.

Bei den in Figur 1 dargestellten Ausführungsbeispielen werden die Farben des Farbmusters 5 durch das RGB-Modell beschrieben. Die Änderungen der Farbwerte des Farbmusters 5 erfolgen durch Änderungen der Farbwerte in den einzelnen Farbkanälen R, G und B.

Das Farbmuster soll dann folgenden Bedingungen genügen:

- In jedem Farbkanal werden lediglich zwei Farbwerte verwendet. Insbesondere wird in jedem Farbkanal jeweils der Minimalwert und der Maximalwert verwendet, so dass im RGB-Modell insgesamt acht Farben zur Verfügung stehen.

- Innerhalb eines Codeworts weist jeder Farbkanal wenigstens eine Farbänderung auf. Diese Bedingung ermöglicht das Decodieren der einzelnen Codewörter.

- Nebeneinander liegende Farbelemente unterscheiden sich in wenigstens zwei Farbkanälen. Diese Bedingung dient insbesondere dazu, die Fehlertoleranz insbesondere gegen Tiefensprünge zu gewährleisten.

- Die einzelnen Codewörter des Farbmusters 5 weisen eine nicht-triviale Hamming-Distanz auf. Auch diese Bedingung dient dazu, die Fehlertoleranz beim Decodieren der Projektionsebenen g zu erhöhen.

- Auch die Farbänderungen werden zu Codewörtern mit einer nicht-trivialen Hamming-Distanz zusammengefasst.

Nachfolgend sei ein Beispiel für das Farbmuster 5 genannt, das den oben genannten fünf Bedingungen genügt. Dieses Farbmuster 5 bezieht sich auf das RGB-Modell mit einem roten Farbkanal R, einem grünen Farbkanal G und einem blauen Farbkanal B. Da Farbwerte in jedem Farbkanal nur jeweils den Minimalwert und Maximalwert annehmen dürfen, stehen insgesamt acht Mischfarben zur Verfügung, denen jeweils die folgenden Zahlen zugeordnet werden:

| Schwarz | 0 |
|---------|---|
| Blau | 1 |
| Grün | 2 |
| Cyan | 3 |
| Rot | 4 |
| Magenta | 5 |
| Gelb | 6 |
| Weiß | 7 |

Für die Codewörter der Farbwerte wurde eine Länge von vier Farbstreifen gewählt, wobei sich benachbarte Codewörter jeweils mit drei Farbstreifen überlappen.

Auch den Farbänderungen wurden Zahlenwerte zugeordnet. Da in jedem der drei Farbkanäle der Farbwert gleich bleiben, abfallen oder ansteigen kann, ergeben sich insgesamt 27 verschiedene Farbänderungen der Mischfarbe, denen jeweils eine Zahl zwischen 0 und 26 zugeordnet wurde. Die Länge der den Farbänderungen zugeordneten Codewörtern wurde gleich drei Farbänderungen gewählt, wobei sich benachbarte Codewörter jeweils mit zwei Farbänderungen überlappen.

Durch einen Suchalgorithmus wurde die folgende Zahlenreihe gefunden, die ein Ausführungsbeispiel des Farbmusters 5 beschreibt, das den oben genannten fünf Bedingungen genügt:
1243070561217414270342127216534171614361605306352717072416305
25074714706503560363474350617252425607

In dem angegebenen Ausführungsbeispiel besteht das erste Codewort aus den Ziffern 1243, das zweite Codewort aus den Ziffern 2340 und das dritte Codewort aus den Ziffern 4307. Das gezeigte Ausführungsbeispiel stellt eine sehr robuste Codierung dar.

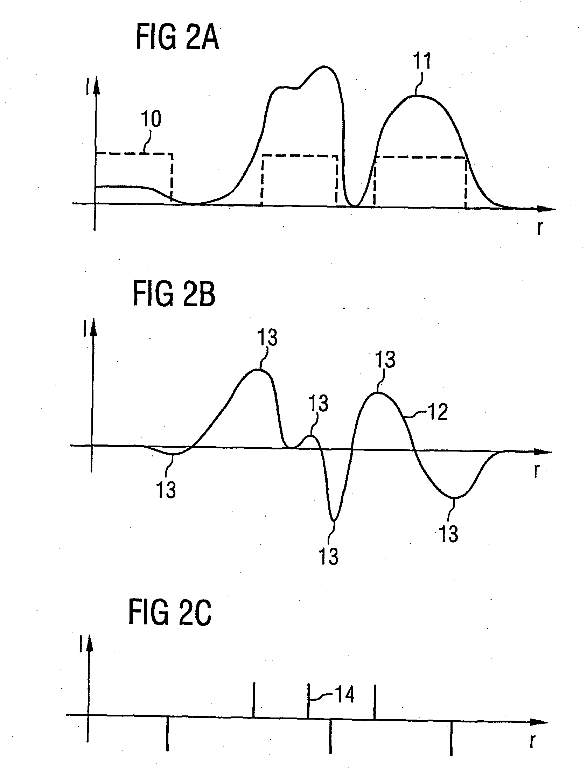

Die Figuren 2a bis c veranschaulichen die Datenreduktion. In Figur 2a ist ein ursprüngliches Farbsignal 10 dargestellt. Durch die Oberfläche 2 des Objekts 3 wird das ursprüngliche Farbsignal 10 zu einem Messsignal 11 verformt. Der Deutlichkeit halber sei darauf hingewiesen, dass das Farbsignal 10 und das Messsignal 11 in Richtung quer zu den Farbstreifen des in Figur 1 dargestellten Farbmusters 5 dargestellt sind.

Für die Datenreduktion wird in einem ersten Schritt eine erste Ableitung 12 des Messsignals 11 berechnet. Anschließend werden die Wendepunkte des Messsignals 11 bestimmt, indem Extremwerte 13 der ersten Ableitung 12 berechnet werden. Die genaue Position wird durch unmittelbares Anfitten einer Parabel oder eines kubischen Polynoms an die Umgebung eines Extremwerts der Ableitung 12 berechnet. Die sich daraus ergebenden Extremwerte werden entsprechend ihrer räumlichen Verteilung zu Extremwerten des gemischten Farbensignals zusammengefasst, die sich über mehrere Farbkanäle erstrecken. Die Position der sich über mehrere Farbkanäle erstreckenden Extremwerte wird berechnet, indem ein gewichteter Mittelwert der Position der Extremwerte in den einzelnen Farbkanälen gebildet wird. Die der Gewichtung dienenden Faktoren werden auf der Grundlage der Qualität der Fitkurve und dem Signalzu-Rauschen-Verhältnis des Messsignals 11 gebildet. Einzelne Extremwerte, denen kein weiterer Extremwert in einem anderen Farbkanal entspricht, werden im Folgenden ignoriert. Da die Wahrscheinlichkeit für das Auftreten eines Extremwerts ohne entsprechenden Farbübergang sehr gering ist, ist dies ein wirksames Mittel, um rauschbedingte Verzerrungen zu eliminieren. In Figur 2c kann beispielsweise der irrtümlich detektierte Extremwert 14 eliminiert werden.

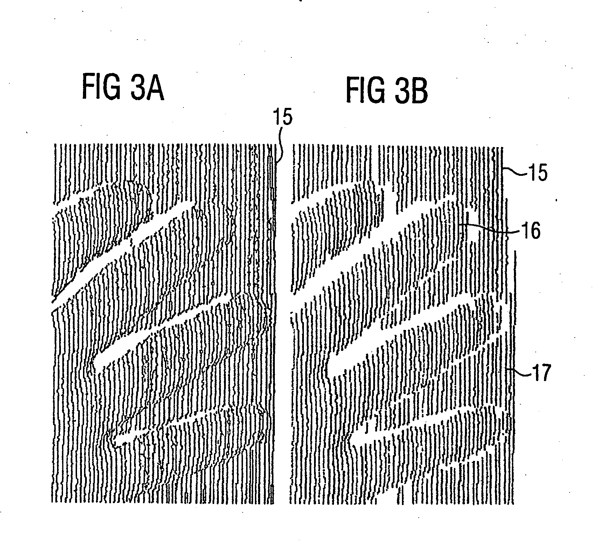

In einem weiteren Verfahrensschritt werden identische Extremwerte zu Profillinien 15 verbunden. Figur 3a zeigt das Ergebnis für den Fall, dass die Extremwerte keiner weiteren Filterung unterzogen werden. Da die Farbänderungen jedoch mit Hilfe von überlappenden Codewörtern strukturiert sind, die untereinander eine nicht-triviale Hamming-Distanz aufweisen, können auch diejenigen Extremwerte herausgefiltert werden, die auf Farbkanten in der Färbung der Oberfläche 2 beruhen. Das Ergebnis ist in Figur 3b dargestellt. Das hier beschriebene Verfahren ist also durchaus in der Lage, die tatsächlichen Profillinien 15 der Farbänderungen zu erfassen, die auf Farbänderungen im Farbmuster 5 beruhen.

Im weiteren Verlauf können den Punkten P des Abbilds 7 über die Farbcodierung die Projektorebenen g zugeordnet werden. Die dreidimensionalen Objektdaten der Oberfläche ergeben sich dann durch eine Triangulation, wenn die Anordnung der Kamera 6 und des Projektors 4 bekannt sind.

Das hier beschriebene Verfahren kann auch dazu verwendet werden, die Färbung des zu erfassenden Objektes 3 zu bestimmen. Der Farbwert eines Punktes P im Abbild 7 kann durch die folgende Formel beschrieben werden:

$$R_c = r_c \cdot \int_{\Delta\lambda} s_c(\lambda) \cdot I_P(\lambda) d\lambda + r_c \cdot \int_{\Delta\lambda} s_c(\lambda) \cdot I_A(\lambda) d\lambda$$

wobei $S_c(\lambda)$ die spektrale Empfindlichkeit eines Sensorelements in der Kamera 6 ergibt, $r_c(\lambda)$ die spektrale Reflektivität der zugehörigen Oberflächen 2, $I_P(\lambda)$ die spektrale Intensität der vom Projektor 4 emittierten Strahlung und $I_a(\lambda)$ die Intensität der Hintergrundbeleuchtung ist. Da $I_P(\lambda)$ für jeden Punkt P nach der Durchführung des oben beschriebenen Verfahrens bekannt ist, kann unter der Annahme, dass $R_c(\lambda)$ im Wesentlichen gleich einer Konstanten $r_c$ ist, aus dem gemessenen Wert $R_c$ in jedem Farbkanal die Konstante $r_c$ berechnet werden, wenn der Einfluss der Hintergrundbeleuchtung vernachlässigt werden kann. Aus den Reflektivitäten $r_c$ der drei Farbkanäle kann dann auf die Färbung der Oberfläche 2 geschlossen werden. Unter Berücksichtigung benachbarter Werte von $r_c$ ist es schließlich möglich, zumindest den niederfrequenten Anteil der Färbung des Objekts 3 zu erfassen.

Das Verfahren wurde bereits ausgiebig getestet. Zum Einsatz kam ein Farbmuster, bei dem 104 Streifen eine eindeutige Codierung bildeten. Für das projizierte Farbmuster 5 wurden jedoch insgesamt 156 Lichtebenen verwendet, da die Geometrie des Versuchsaufbaus eine teilweise Wiederholung des codierten Musters gestattet.

Für den Projektor 4 wurde sowohl ein einfacher Diaprojektor als auch ein LCD-Projektor verwendet. Ein einfacher Diaprojektor, dessen Optik auf eine große Fokustiefe optimiert ist, ist dabei unter Kostengesichtspunkten die bessere Alternative.

Für die Kamera wurden verschiedene RGB-Kameras mit einer Auflösung von 574 x 768 Pixeln verwendet. Um ein Übersprechen zwischen den einzelnen Farbkanälen möglichst zu unterdrücken, ist eine gute Farbtrennung in der Kamera 6 wesentlich. Für die Auswerteeinheit 9 wurde ein Computer mit einem Pentium IV 2,4 GHz-Prozessor verwendet. Damit ließen sich auch ohne Geschwindigkeitsoptimierung des Programmcodes bis zu 15 Bilder pro Sekunde aufnehmen und analysieren. Das Verfahren ist daher durchaus für die Erkennung von Gesten geeignet.

Das Verfahren arbeitet zuverlässig, wenn die Variation der Einfärbung der Oberfläche 2 und der Hintergrundbeleuchtung nicht in Frequenz und Amplitude der Farbänderung des Farbmusters 5 entspricht. Dies ist auch aus den Figuren 3a und 3b erkennbar, bei denen die Finger 16 auf einer mehrfarbigen Unterlage 17 aufliegen.

Eine Fläche muss mindestens 8 x 8 Pixel in dem Abbild 7 groß sein, damit ihr eine dreidimensionale Koordinate zugeordnet werden kann. Denn zur Auswertung sind wenigstens zwei vollständige Farbstreifen notwendig, wobei ein Farbstreifen in der Kamera 6 wenigstens 3 Pixel breit ist.

Da bei der Ausführung des hier beschriebenen Verfahrens eine einzelne Aufnahme der Oberfläche 2 genügt, um dreidimensionale Koordinaten der Oberfläche 2 zu bestimmen, eignet sich das hier beschriebene Verfahren und die hier beschriebene Vorrichtung insbesondere zur Erfassung von sich bewegenden oder verformenden Objekten. Das hier beschriebene Verfahren ist daher insbesondere im Rahmen der Biometrie für die Gesichtserkennung und die Gestenerfassung geeignet. Insofern eignet sich das hier beschriebene Verfahren vor allem für die Identifizierung und Authentifizierung von Personen.

Weitere Anwendungsgebiete betreffen die Qualitätssicherung von Produkten, die Vermessung von Gegenständen in der Konstruktion, zum Beispiel für den Nachbau, für Reparaturen oder die Erweiterung von bestehenden Maschinen oder Anlagen, oder die dreidimensionale Modellierung von Objekten im Multimedia- und Spielebereich.

Es sei angemerkt, dass auch andere Farbmodelle, z. B. das YUV-Modell, zur Beschreibung des Farbmusters 5 verwendet werden können.

Außerdem sei angemerkt, dass unter dem Begriff Kamera jedes abbildende System verstanden wird.

**Patentansprüche**

1. Verfahren zur dreidimensionalen Erfassung von Objekten (3), bei dem

   - auf das zu erfassende Objekt (3) ein Farbmuster (5) mit bekannten Projektionsdaten projiziert wird,
   - das auf das Objekt (3) projizierte Farbmuster (5) mit einer Kamera (6) erfasst wird, und
   - das von der Kamera (6) erzeugte Abbild (7) in einer Auswerteeinheit (9) zu dreidimensionalen Objektkoordinaten des Objekts (3) verarbeitet wird,

**dadurch gekennzeichnet, dass**
die Projektionsdaten im Farbmuster (5) mit Hilfe eines redundanten Codes codiert werden.

2. Verfahren nach Anspruch 1,
bei dem Farbwerte im Farbmuster (5) mit Hilfe von Codewörtern eines redundanten Codes strukturiert werden und bei dem die Projektionsdaten eines Punktes (P) des Abbilds (7) mit Hilfe einer von der Auswerteeinheit (9) durchgeführten Suche nach den die Farbwerte codierenden Codewörtern identifiziert werden

3. Verfahren nach Anspruch 1 oder 2,
bei dem Farbänderungen des Farbmusters (5) mit Hilfe von Codewörtern eines redundanten Codes strukturiert werden und bei dem während der Auswertung in der Auswerteeinheit (9) den Codewörtern entsprechende Farbänderungen als gültige Farbänderungen zugelassen werden.

4. Verfahren nach Anspruch 2 oder 3,
bei dem Codewörter mit einer nicht-trivialen Hamming-Distanz verwendet werden.

5. Verfahren nach einem der Ansprüche 2 bis 4,
bei dem die Codewörter überlappend angeordnet werden.

6. Verfahren nach einem der Ansprüche 1 bis 5,
bei dem die Farbwerte in jeden Farbkanal zwischen zwei Werten variiert werden.

7. Verfahren nach Anspruch 6,
bei dem die Farbwerte in jedem Farbkanal zwischen einem Minimalwert und einem Maximalwert variiert werden.

8. Verfahren nach einem der Ansprüche 1 bis 7,
bei dem die Farbwerte in wenigstens zwei Kanälen zusammen geändert werden und bei dem in wenigstens zwei Farbkanälen zusammen.auftretende Farbänderungen während der Auswertung in der Auswerteeinheit (9) als gültige Farbänderungen zugelassen werden.

9. Verfahren nach einem der Ansprüche 1 bis 8,
bei dem in jedem Farbkanal innerhalb von jedem Codewort mindestens eine Farbänderung durchgeführt wird.

10. Verfahren nach einem der Ansprüche 1 bis 9,
bei dem in der Auswerteeinheit (9) die Positionen von Farbänderungen in jedem Farbkanal mit Hilfe von Extremwerten einer ersten Ableitung (12) eines Messsignals (11) bestimmt werden.

11. Verfahren nach einem der Ansprüche 1 bis 10,
bei dem das Farbmuster (5) streifenförmig ausgebildet wird und bei dem während der Auswertung in der Auswerteeinheit (9) einander entsprechende Farbänderungen zu Profillinien (15) verbunden werden.

12. Verfahren nach einem der Ansprüche 1 bis 11,
bei dem eine einzelne Aufnahme des Abbilds (7) zur Bestimmung der dreidimensionalen Koordinaten der Oberfläche (2) des Objekts (3) durchgeführt wird.

13. Verfahren nach einem der Ansprüche 1 bis 12,
bei dem durch Auswertung der im Abbild (7) erfassten Farbe des Farbmusters (5) und der im Farbmuster (5) ursprünglich projizierten Farbe eine Färbung der Oberfläche (2) des Objekts (3) rekonstruiert wird.

14. Vorrichtung zur dreidimensionalen Erfassung von Objekten mit einem Projektor (4) zur Projektion eines Farbmusters (5) auf eine Oberfläche (2) eines zu erfassenden Objekts (3) und mit einer Kamera (6) zur Aufnahme eines Abbilds (7) des auf die Oberfläche (2) projizierten Farbmusters (5) sowie mit einer Auswerteeinheit (9) zur Auswertung des Abbilds (7),
**dadurch gekennzeichnet, dass**
das vom Projektor (4) projizierbare Farbmuster (5) und die Auswerteeinheit (9) für die Durchführung des Verfahrens nach einem der Ansprüche 1 bis 13 eingerichtet sind.

15. Verwendung des Verfahrens nach einem der Ansprüche 1 bis 13 oder der Vorrichtung nach Anspruch 14 für die Gesichterkennung von Personen.

**16.** Verwendung des Verfahrens nach einem der Ansprüche 1 bis 13 oder der Vorrichtung nach Anspruch 14 für die Gestenerkennung von Personen.

## Claims

**1.** Method for three-dimensional detection of objects (3), in which

- a colour pattern (5) with known projection data is projected onto the object to be detected (3),
- the colour pattern (5) projected onto the object (3) is recorded with a camera (6), and
- the image (7) recorded by the camera (6) is processed in an analysis unit (9) into three-dimensional object coordinates of the object (3),

**characterized in that**,
the projection data in the colour pattern (5) is encoded with the aid of a redundant code.

**2.** Method according to claim 1,
in which colour values in the colour pattern (5) are structured with the aid of codewords of a redundant code and in which the projection data of a point (P) of the image (7) are identified with the aid of a search performed by the analysis unit (9) for the codewords encoding the colour values.

**3.** Method according to claim 1 or 2,
in which colour changes of the colour pattern (5) are structured with the aid of codewords of a redundant code and in which, during analysis in the analysis unit (9), the codewords are allowed corresponding colour changes as valid colour changes.

**4.** Method according to claim 2 or 3,
in which codewords with a non-trivial Hamming distance are used.

**5.** Method according to one of the claims 2 to 4,
in which the codewords are arranged so that they overlap.

**6.** Method according to one of the claims 1 to 5,
in which the colour values are varied in each colour channel between two values.

**7.** Method according to claim 6,
in which the colour values are varied in each colour channel between a minimum value and a maximum value.

**8.** Method according to one of the claims 1 to 7,
in which the colour values are changed in at least two channels together and in which colour changes occurring in at least two colour channels are allowed as valid colour changes during analysis in the analysis unit (9).

**9.** Method according to one of the claims 1 to 8,
in which, in each colour channel within each codeword at least one colour change is performed.

**10.** Method according to one of the claims 1 to 9,
in which in the analysis unit (9) the position of colour changes in each colour channel is determined with the aid of extreme values of a first derivation (12) of a measurement signal (11).

**11.** Method according to one of the claims 1 to 10,
in which the colour pattern (5) is formed as stripes and in which, during analysis in the analysis unit (9), colour changes corresponding to each other are combined into profile lines (15).

**12.** Method according to one of the claims 1 to 11,
in which an individual recording of the image (7) for determining the three-dimensional coordinates of the surface (2) of the object (3) is performed.

**13.** Method according to one of the claims 1 to 12, in which, by evaluating the colour of the colour pattern (5) recorded in the image (7) and the colour originally projected in the colour pattern (5) a colouring of the surface (2) of the object (3) is reconstructed.

**14.** Device for three-dimensional detection of objects with a projector (4) to project a colour pattern (5) onto a surface (2) of an object to be recorded (3) and with a camera (6) to record an image (7) of the colour pattern (5) projected onto the surface (2), as well as with an analysis unit (9) for analyzing the image (7),
**characterized in that**
the colour pattern (5) that can be projected by the projector (4) and the analysis unit (9) are set up to execute the method according to one of the claims 1 to 13.

**15.** Use of the method according to one of the claims 1 to 13 or of the device according to claim 14 for recognizing the faces of people.

**16.** Use of the method according to one of the claims 1 to 13 or the device according to claim 14 for recognizing the gestures of people.

**Revendications**

**1.** Procédé de détection tridimensionnelle d'objets (3), dans lequel

   - un échantillon chromatique (5) est projeté avec des données de projection connues sur l'objet à détecter (3),
   - l'échantillon chromatique (5) projeté sur l'objet (3) est détecté au moyen d'une caméra (6) et
   - l'image (7) générée par la caméra (6) est traitée dans une unité d'évaluation (9) pour obtenir des coordonnées d'objet tridimensionnelles de l'objet (3),

   **caractérisé en ce que** les données de projection, dans l'échantillon chromatique (5), sont codées à l'aide d'un code redondant.

**2.** Procédé selon la revendication 1, dans lequel des valeurs chromatiques, dans l'échantillon chromatique (5), sont structurées à l'aide de mots de code d'un code redondant et dans lequel les données de projection d'un point (P) de l'image (7) sont identifiées à l'aide d'une recherche, effectuée par l'unité d'évaluation (9), des mots de code qui codent les valeurs chromatiques.

**3.** Procédé selon la revendication 1 ou 2, dans lequel des modifications chromatiques de l'échantillon chromatique (5) sont structurées à l'aide de mots de code d'un code redondant et dans lequel des modifications chromatiques correspondant aux mots de code sont admises en tant que modifications chromatiques valables pendant l'évaluation dans l'unité d'évaluation (9).

**4.** Procédé selon la revendication 2 ou 3, dans lequel on utilise des mots de code avec une distance de Hamming non triviale.

**5.** Procédé selon l'une des revendications 2 à 4, dans lequel les mots de code sont disposés en chevauchement.

**6.** Procédé selon l'une des revendications 1 à 5, dans lequel on fait varier les valeurs chromatiques entre deux valeurs dans chaque canal chromatique.

**7.** Procédé selon la revendication 6, dans lequel on fait varier les valeurs chromatiques entre une valeur minimale et une valeur maximale dans chaque canal chromatique.

**8.** Procédé selon l'une des revendications 1 à 7, dans lequel les valeurs chromatiques sont modifiées dans au moins deux canaux conjointement et dans lequel des modifications chromatiques qui se présentent conjointement dans au moins deux canaux chromatiques sont admises en tant que modifications chromatiques valables pendant l'évaluation dans l'unité d'évaluation (9).

**9.** Procédé selon l'une des revendications 1 à 8, dans lequel au moins une modification chromatique est effectuée dans chaque canal chromatique au sein de chaque mot de code.

**10.** Procédé selon l'une des revendication 1 à 9, dans lequel les positions de modifications chromatiques dans chaque canal chromatique sont déterminées, dans l'unité d'évaluation (9), à l'aide de valeurs extrêmes d'une première dérivée (12) d'un signal de mesure (11).

**11.** Procédé selon l'une des revendications 1 à 10, dans lequel l'échantillon chromatique (5) se présente sous la forme de bandes et dans lequel, pendant l'évaluation dans l'unité d'évaluation (9), des modifications chromatiques qui se correspondent sont associées pour obtenir des lignes de profil (15).

**12.** Procédé selon l'une des revendications 1 à 11, dans lequel une prise de vue isolée de l'image (7) est effectuée pour déterminer les coordonnées tridimensionnelles de la surface (2) de l'objet (3).

**13.** Procédé selon l'une des revendications 1 à 12, dans lequel une coloration de la surface (2) de l'objet (3) est reconstruite par évaluation de la couleur de l'échantillon chromatique (5) détectée dans l'image (7) et de la couleur projetée initialement dans l'échantillon chromatique (5).

**14.** Dispositif de détection tridimensionnelle d'objets avec un projecteur (4) pour projeter un échantillon chromatique (5) sur une surface (2) d'un objet à détecter (3) et avec une caméra (6) pour réaliser une prise de vue d'une image (7) de l'échantillon chromatique (5) projeté sur la surface (2) ainsi qu'avec une unité d'évaluation (9) pour évaluer l'image (7), **caractérisé en ce que** l'échantillon chromatique (5) pouvant être projeté par le projecteur (4) et l'unité d'évaluation (9) pour l'exécution du procédé sont conçus selon l'une des revendications 1 à 13.

**15.** Utilisation du procédé selon l'une des revendications 1 à 13 ou du dispositif selon la revendication 14 pour la reconnaissance de visages de personnes.

**16.** Utilisation du procédé selon l'une des revendications 1 à 13 ou du dispositif selon la revendication 14 pour la reconnaissance de gestes de personnes.

FIG 1

## FIG 2A

## FIG 2B

## FIG 2C

## FIG 3A

## FIG 3B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19963333 A1

**In der Beschreibung aufgeführte Nicht-Patentliteratur**

- **P. VUYLSTEKE ; A. OOSTERLINCK.** Range Image Acquisition with a Single Binary-Encoded Light Pattern. *IEEE Transactions on Pattern Analysis and Machine Intelligence,* Februar 1990, vol. 12 (2